# FASCICULE DE BREVET EUROPEEN

(11) **EP 2 591 219 B1**
(45) Date de publication et mention de la délivrance du brevet: **11.05.2016**
(21) Numéro de dépôt: 11743295.5
(22) Date de dépôt: 05.07.2011
(51) Int. Cl.: F02C 6/02

(54) **PROCÉDÉ ET ARCHITECTURE DE RECOMBINAISON DE PUISSANCE DE TURBOMACHINE**
VERFAHREN UND ARCHITEKTUR ZUR REKOMBINATION DER LEISTUNG EINER TURBOMASCHINE
METHOD AND ARCHITECTURE FOR RECOMBINING THE POWER OF A TURBOMACHINE

(30) Priorité: 06.07.2010 FR 1055460
(43) Date de publication de la demande: 15.05.2013
(73) Titulaire: Turbomeca, 64510 Bordes (FR)
(72) Inventeur: BEDRINE, Olivier, F-64290 Bordarros (FR); MARCONI, Patrick, F-64110 Gelos (FR); PUERTO, Alphonse, F-64170 Lacq (FR)
(74) Mandataire: Gevers & Orès
(86) Numéro de dépôt international: PCT/FR2011/051585
(87) Numéro de publication internationale: WO 2012/004516

(56) Documents cités:
- FR-A- 1 339 734
- US-A- 2 814 181
- US-A- 4 147 024
- US-A- 4 896 499
- US-A1- 2004 257 840
- US-A1- 2010 089 023

## Description

### DOMAINE TECHNIQUE

L'invention concerne un procédé de recombinaison de puissance fournie par une turbomachine, ainsi qu'une architecture de turbomachine pour la mise en oeuvre d'un tel procédé.

Une turbomachine est ici définie comme étant une machine aéronautique dite turbine à gaz apte à fournir de la puissance sur arbre. On distingue en général dans cette catégorie les turbomoteurs (moteurs d'hélicoptère, unités de puissance auxiliaires appelées ci-après APU) et les turbopropulseurs (avions, drones).

Classiquement, une configuration de base de turbomachine d'aéronef comporte comme composants essentiels de révolution, agencés sur une même ligne principale : une entrée d'air, au moins un compresseur d'air, une chambre de combustion des gaz, au moins une turbine haute pression (ci-après HP) d'entraînement du (des) compresseur(s) par un arbre HP, au moins une turbine de puissance, pouvant être une turbine liée et/ou libre (ci-après TL) de transformation de l'énergie disponible après la turbine HP en énergie mécanique, et une tuyère d'échappement des gaz. Selon des configurations adaptées aux architectures, les turbines de puissance peuvent également être agencées sur des axes de rotation en dehors de la ligne dite principale.

L'énergie mécanique fournie par la turbine TL via un arbre de puissance entraîne des charges utiles, via des arbres de transmission et des réducteurs selon les configurations: un rotor d'hélicoptère, une hélice de turbopropulseur, ainsi que les équipements (alternateur, injecteur, pompe, compresseur de charge, pompe hydraulique, etc.).

Les progrès réalisés dans les organes et les composants, tant dans leur structure, leur matériau ou leur combinaison, ont permis d'améliorer sensiblement le rendement énergétique de ces machines. Une autre approche, dite approche énergétique, pour augmenter ce rendement consiste à réduire la perte d'énergie liée à la température des gaz d'échappement qui n'est pas transformée.

### ETAT DE LA TECHNIQUE

L'approche énergétique est actuellement développée selon deux filières, appelées cogénération et régénération :
- la cogénération consiste à récupérer de l'énergie sous des formes variées selon des localisations optimisées, la récupération étant réalisée simultanément pour au moins deux des modes de récupération suivants : de l'énergie électrique par un alternateur couplé à l'arbre de puissance, de l'énergie de pression d'air par prélèvement d'air comprimé en aval du compresseur, et de l'énergie calorifique par un échangeur dans la tuyère d'échappement ;
- la régénération vise à réchauffer l'air comprimé avant son admission en chambre de combustion à partir d'un prélèvement calorifique effectué à l'échappement par un échangeur parcouru par le flux d'air comprimé et le flux des gaz d'échappement.

Une telle architecture de turbomachine selon l'art antérieur est divulguée dans le document US 4147024.

La cogénération permet d'améliorer le rendement global de l'installation mais reste appliquée aux turbines à gaz industrielles du fait de l'encombrement et de la masse des moyens de transformation énergétique nécessaires. Par ailleurs, la régénération pose également le problème de l'encombrement de l'échangeur et de la masse pénalisante du système. De plus, la fiabilité de l'échangeur n'étant pas assurée du fait des conditions environnementales sévères (température, vibrations, charges de manoeuvre, etc.) le moteur en serait directement affecté.

### EXPOSE DE L'INVENTION

L'invention s'inscrit dans l'approche énergétique et vise à s'affranchir des problèmes relevés ci-dessus, notamment d'encombrement, de masse ou de fiabilité. Pour ce faire, de l'énergie est récupérée dans la tuyère d'échappement, transformée et additionnée de manière adaptée à la turbomachine.

Plus précisément, la présente invention a pour objet un procédé de recombinaison de puissance fournie par une turbomachine d'aéronef ayant une configuration de base du type décrit ci-dessus, comportant au moins un générateur de gaz, une turbine de puissance et une tuyère d'échappement. Dans ce procédé, de l'énergie est récupérée par un échange thermique dans la tuyère d'échappement, cette énergie récupérée est ensuite transformée par un système indépendant sous forme d'énergie mécanique, et l'énergie transformée est recombinée à l'énergie fournie par la turbomachine dans une zone unique, la recombinaison, de nature mécanique ou électrique, étant réalisée par connexion correspondante à un arbre d'entraînement HP du générateur de gaz et à un arbre de puissance de la turbine de puissance et dédiée à la fourniture de puissance mécanique et/ou électrique en fonction des besoins de la turbomachine et de fonctionnement de l'aéronef.

Selon des modes de mise en oeuvre particuliers :
- la recombinaison est réalisée dans une zone choisie parmi une zone amont (Z1), une zone aval (Z2), une zone de transmission principale (3) et une zone de regroupement global des moyens de transmission de puissance ;
- la recombinaison est de nature mécanique et réalisée sur un arbre de transmission de puissance de la turbomachine par l'intermédiaire d'une connexion choisie parmi une réduction de puissance, une liaison additionnelle et une liaison aux accessoires et une transmission principale, en fonction de la configuration de la turbomachine ; avantageusement, une seule interface vers l'aéronef est ainsi agencée pour fournir les besoins en puissance mécanique ;
- la recombinaison est de nature mécanique ou électrique, et réalisée par connexion sur l'arbre d'entraînement HP du générateur de gaz pendant des phases de fonctionnement de la turbomachine, en particulier pendant des phases transitoires ou de courtes durées lors de phases stabilisées, et sur l'arbre de puissance de la turbine de puissance pendant des durées complémentaires ;
- la recombinaison est de nature électrique et réalisée par transformation de l'énergie récupérée en énergie électrique sur un réseau de bord de l'aéronef et/ou vers des accessoires de la turbomachine et/ou par motorisation électrique pour entraîner des équipements de l'aéronef.

Dans le cas d'un aéronef équipé de plusieurs turbomachines dit environnement multi-moteur, le procédé de recombinaison utilise un système indépendant de transformation énergétique positionné sur l'un des moteurs ou commun aux moteurs en récupérant l'énergie des moteurs par des échanges thermiques montés en série dans les tuyères des moteurs.

L'invention se rapporte également à une architecture de turbomachine de mise en oeuvre de ce procédé. Une telle architecture, du type décrit ci-dessus, comporte un échangeur de chaleur positionné dans la tuyère d'échappement et couplé à un système indépendant de transformation d'énergie thermique en énergie mécanique couplé à l'échangeur de chaleur. Ce système indépendant est connecté à des moyens de recombinaison mécaniques et/ou électriques localisés en une zone unique selon la configuration de la turbomachine, les moyens de recombinaison sont aptes à transmettre la puissance fournie par le système indépendant sur l'arbre d'entraînement HP du générateur de gaz et sur l'arbre de puissance de la turbine de puissance, pour satisfaire aux besoins mécaniques et/ou électriques correspondants de la turbomachine et de l'aéronef.

Selon des modes de réalisation particuliers :
- le système indépendant de transformation énergétique peut être déconnecté par des moyens de libéralisation choisis parmi un crabot, une zone fragilisée, en particulier une section à casser, et une roue libre ;
- le système indépendant est un moteur thermique auxiliaire en cycle ouvert, en particulier un turbomoteur à turbine libre ou liée - c'est-à-dire à un seul arbre - dans lequel la chambre de combustion est remplacée par un échangeur de chaleur;
- le système indépendant est un moteur à fluide à changement de phases comportant un condenseur, une pompe et un organe de détente moteur de type cinétique (turbine) ou volumétrique (pistons, palettes, etc.);
- le système indépendant est moteur à air en cycle ouvert à pistons selon un cycle à deux ou quatre temps, couplé à l'échangeur de chaleur ;
- la turbine de puissance est connectée au système indépendant, sur les moyens de recombinaison mécaniques et/ou électriques ;
- l'arbre de puissance peut être un arbre traversant amont (30), cet arbre et l'arbre de puissance (15) du système indépendant (16) étant couplés via des moyens mécaniques de recombinaison, constituant une interface mécanique unique pour l'aéronef ; ces moyens sont choisis entre un réducteur de puissance, une boîte de transmission principale, une boîte d'accessoires et un boîtier additionnel ;
- l'arbre de puissance peut être un arbre non traversant aval apte à transmettre soit directement soit par couplage à un arbre de puissance extérieur, parallèle à la ligne principale, de la puissance à l'aéronef respectivement soit en aval soit en amont, l'arbre non traversant aval et l'arbre de puissance du système indépendant étant couplés via des moyens mécaniques de recombinaison, constituant une interface mécanique unique pour l'aéronef ; ces moyens de recombinaison sont choisis entre un réducteur de puissance, une boîte de transmission principale et un boîtier additionnel d'adaptation à la configuration de base ; cette dernière option est avantageusement utilisée pour une intégration complexe, en particulier dans le cas d'un moteur à prise directe avec une entrée d'air axiale;
- le couplage entre le système indépendant et les moyens de recombinaison peut être réalisé par un arbre ou directement « flasqué » sur ces moyens de recombinaison;
- les moyens de recombinaison mécaniques et électriques sont aptes à transmettre la puissance fournie par le système indépendant à l'arbre HP du générateur de gaz pendant des phases de fonctionnement de la turbomachine et à l'arbre de puissance de la turbine de puissance pendant des durées complémentaires ;
- les moyens de recombinaison sont électriques et constitués par un alternateur couplé directement au réseau de bord de l'aéronef ou via un moteur électrique d'entraînement d'équipements de l'aéronef.

Dans le cas d'un aéronef équipé de plusieurs turbomachines, appelé environnement multi-moteurs, une architecture multi-moteurs utilise un système indépendant de transformation énergétique positionné sur un seul moteur ou commun aux moteurs en récupérant l'énergie des moteurs par des échangeurs de chaleur montés en série dans les tuyères des moteurs. Les moyens de recombinaison mécaniques sont réalisés par une recombinaison sur les différents moteurs ou directement sur une boîte de transmission principale sur laquelle sont couplés les arbres de puissance des moteurs et les moyens de recombinaison électriques sont réalisés par couplage à un alternateur d'alimentation du réseau de bord de l'aéronef.

### BREVE DESCRIPTION DES FIGURES

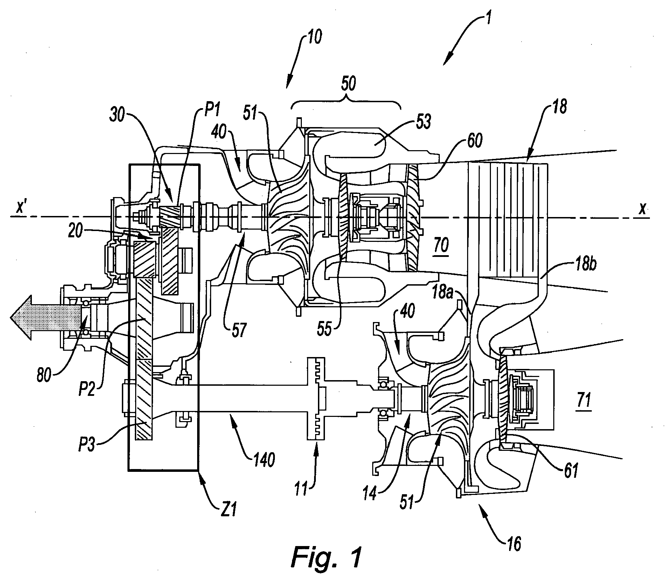

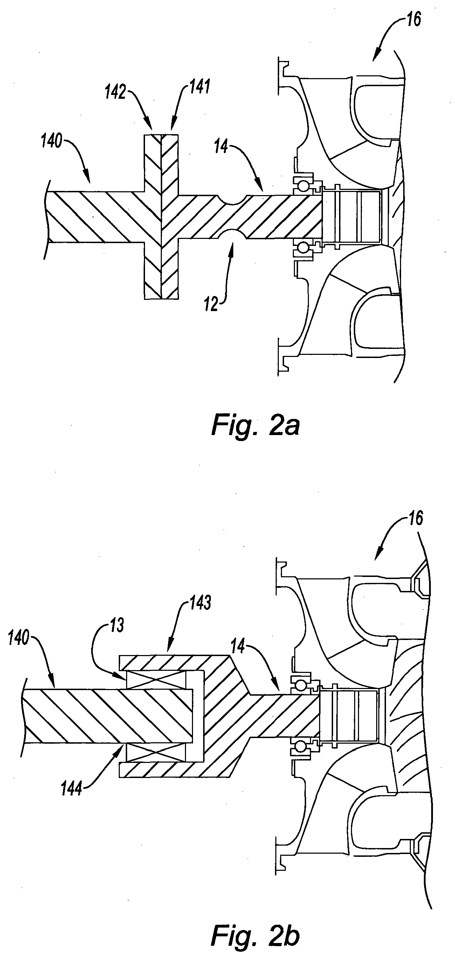

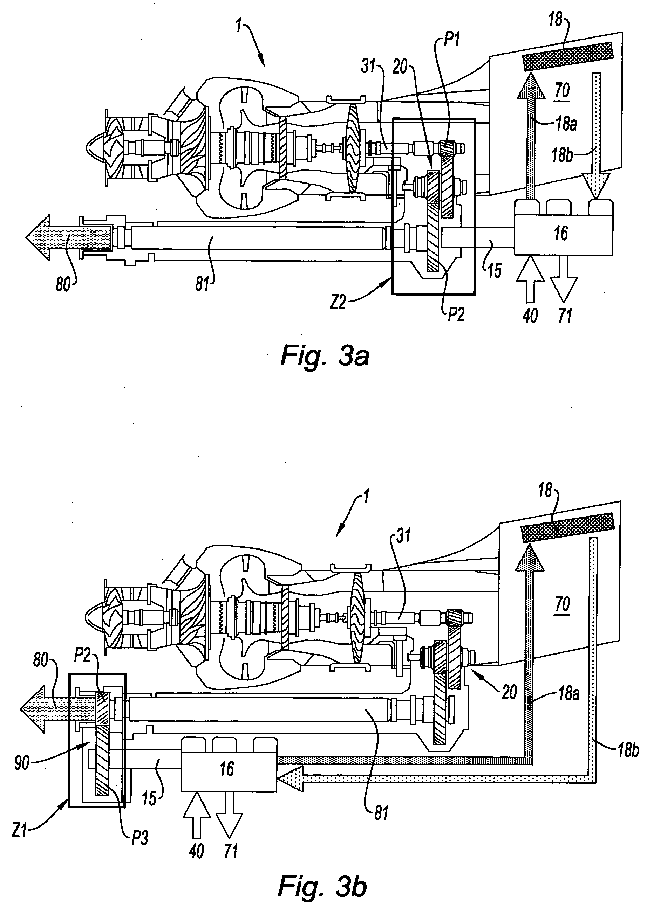

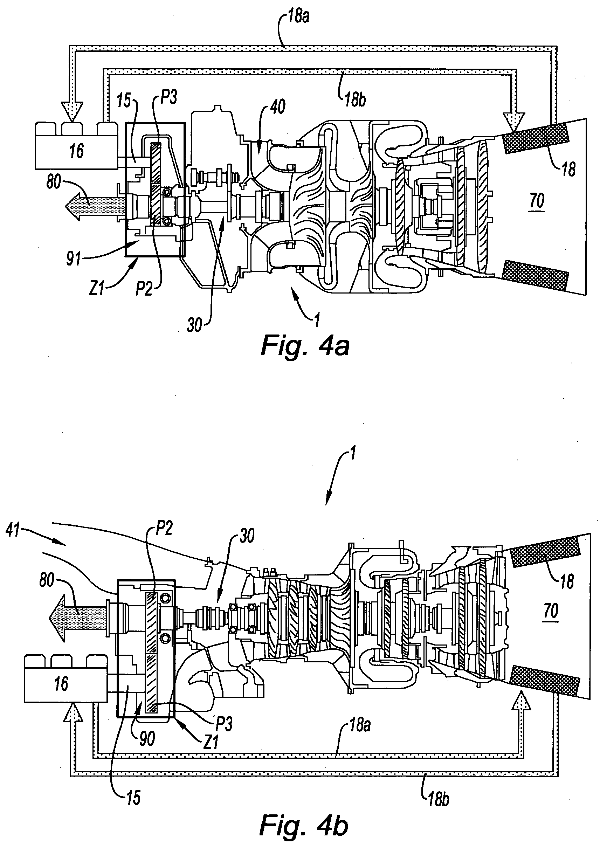

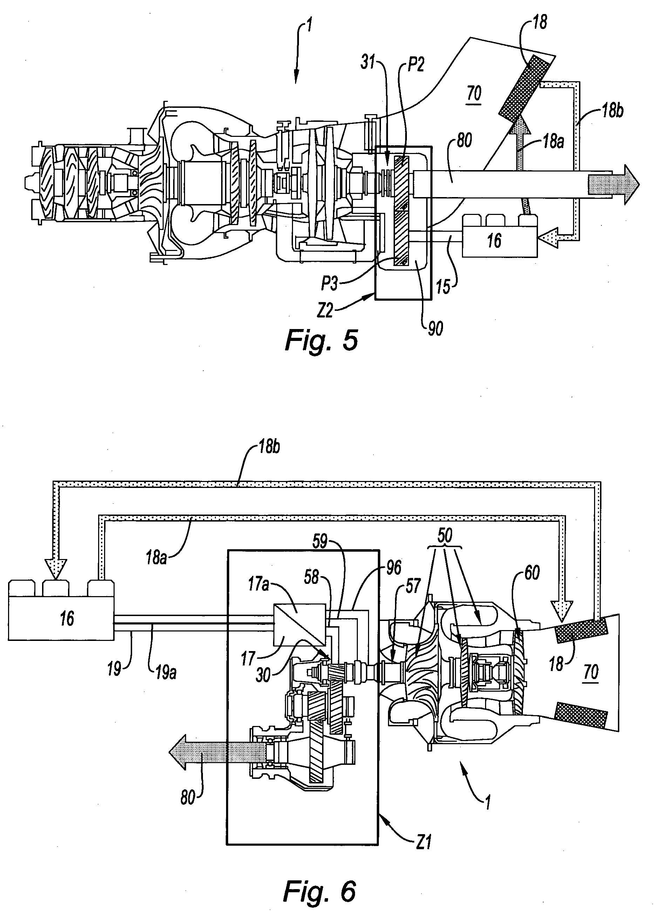

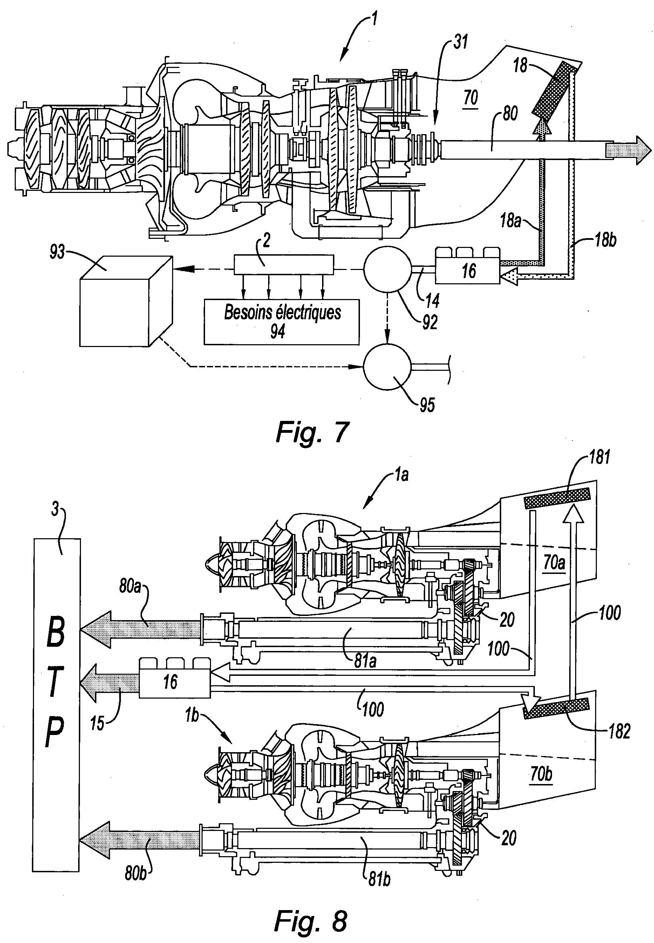

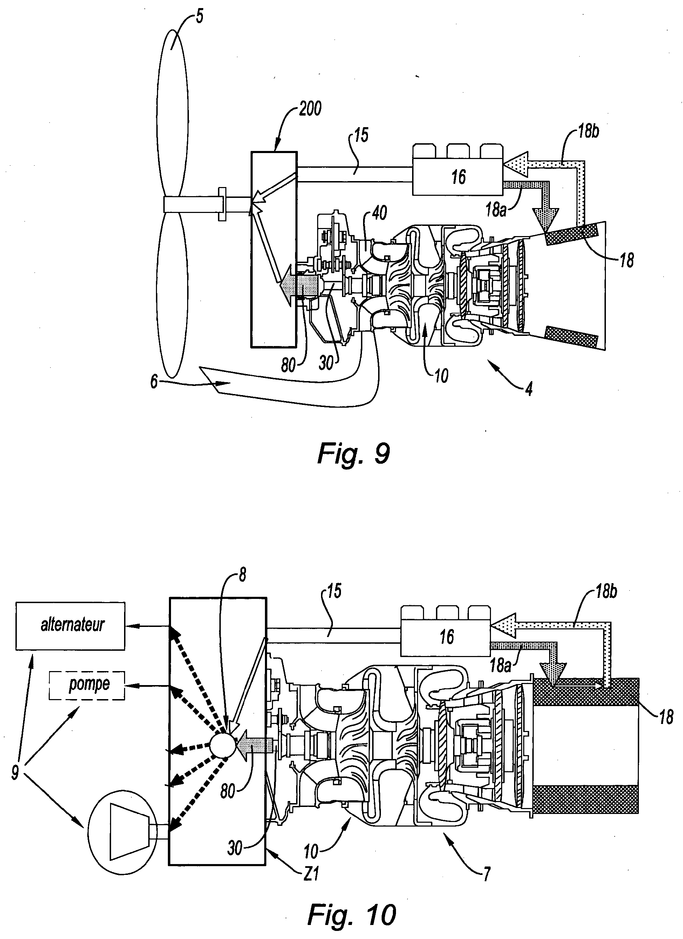

D'autres aspects, caractéristiques et avantages de l'invention apparaîtront dans la description non limitative qui suit, relative à des modes de réalisation particuliers, en référence aux dessins annexés qui représentent, respectivement :
- en figure 1, une vue en coupe schématisée d'un exemple d'architecture de turbomoteur principal à arbre traversant, réducteur amont et, comme système indépendant, un turbomoteur modifié à crabot de déconnexion;
- en figures 2a et 2b, deux vues en coupe schématisées d'alternatives au moyen de déconnexion du système indépendant selon la figure 1, respectivement à section à casser et à roue libre ;
- en figures 3a et 3b, des vues en coupe schématisée d'exemples d'architecture selon l'invention à arbre de puissance extérieur et réducteur en aval, le système indépendant étant respectivement recombiné soit en aval par le réducteur (figure 3a) soit en amont par un boîtier additionnel (figure 3b) ;
- en figures 4a et 4b, des vues en coupe schématisées d'exemples d'architecture selon l'invention à arbre traversant en prise directe (sans réducteur), l'entrée d'air étant respectivement radiale et axiale et le système indépendant étant respectivement recombiné par la boîte accessoire et par un boîtier additionnel ;
- en figure 5, une vue en coupe schématisée d'un exemple d'architecture selon l'invention à arbre non traversant à prise directe aval et boîtier additionnel de recombinaison de puissance ;
- en figure 6 une vue en coupe schématisée d'un exemple d'architecture selon l'invention à recombinaison de puissance sur les arbres HP et TL via une connexion mécanique ou électrique ;
- en figure 7, une vue en coupe schématisée d'un exemple d'architecture selon l'invention avec un système indépendant connecté sur le réseau de bord via un alternateur comme moyen de recombinaison de puissance électrique ;
- en figure 8, une vue en coupe schématisée d'un exemple d'architecture à environnement bi-turbomoteurs avec échangeurs de chaleur en série et recombinaison de puissance sur le boîtier de transmission principale ;
- en figure 9, une vue en coupe schématisée d'un exemple d'architecture de turbopropulseur avec un réducteur d'hélice comme moyen de recombinaison de puissance, et
- en figure 10, une vue en coupe schématisée d'un exemple d'architecture d'APU avec une boîte d'accessoires comme moyen de recombinaison de puissance.

### DESCRIPTION DETAILLEE DE MODES DE REALISATION

Dans la description qui suit, les termes amont et aval - respectivement avant et arrière - sont associés aux localisations par rapport au générateur de gaz selon l'axe orienté X'X le long de la ligne principale. Par ailleurs, dans toutes les figures, les éléments identiques ou semblables, exerçant une même fonction, sont identifiés avec des signes de référence identiques.

En référence à la figure 1, la vue en coupe schématisée d'une architecture selon l'invention illustre une localisation avant Z1 de recombinaison de puissance sur un réducteur de puissance 20. Sur cet exemple, le turbomoteur principal 1 possède un arbre de puissance traversant 30 en prise par un pignon P1 sur le réducteur de puissance 20 disposé en amont par rapport à un générateur de gaz 50. Classiquement, la configuration de base 10 d'un tel turbomoteur comporte, de révolution sur l'axe X'X : une entrée d'air radiale 40, un compresseur d'air centrifuge 51, une chambre de combustion des gaz 53, une turbine HP 55 - qui transforme une partie de l'énergie cinétique, issue de la combustion des gaz (mélange d'air comprimé et de carburant) dans la chambre 53, en énergie mécanique, afin d'entraîner le compresseur 51 par un arbre HP 57 -, une turbine de puissance 60 et une tuyère d'échappement 70 des gaz résiduels.

Dans l'exemple illustré, la chaîne - compression (par le compresseur centrifuge 51), combustion (dans la chambre de combustion 53) et détente (par la turbine HP 55) - forme le générateur de gaz 50 et la turbine de puissance 60 est une turbine libre dite TL. Dans d'autres exemples, une ou des turbines liées ou libres peuvent participer également à la génération de puissance.

La turbine TL 60 transforme l'énergie cinétique résiduelle, issue du générateur de gaz 50, en énergie mécanique. Cette énergie mécanique est délivrée aux charges utiles (rotor, équipements, accessoires, etc.) via l'arbre de puissance traversant 30, le réducteur 20, et un arbre de transmission de puissance 80 en prise au niveau du pignon P2 du réducteur 20.

La recombinaison de puissance est plus précisément matérialisée par la prise d'arbre amont sur pignon P3 d'un arbre de puissance 140 provenant d'un turbomoteur auxiliaire 16, constituant ici le système indépendant selon l'invention. Ce turbomoteur est un moteur thermique en cycle ouvert à entrée d'air radiale 40, compresseur 51, turbine liée 61 et arbre unique 14.

Le générateur de gaz de ce turbomoteur est ici formé par la compression d'air dans le compresseur 51, la récupération de chaleur effectuée par le transfert de l'air ainsi comprimé - via une canalisation d'entrée 18a - dans un échangeur de chaleur 18 disposé dans la tuyère d'échappement 70 du turbomoteur 1, et la détente de l'air à travers la turbine 61 du turbomoteur auxiliaire 16. Les canalisations 18a et 18b ainsi que l'échangeur 18 apparaissent dans la plupart des figures annexées (sauf sur les figures 2a, 2b et 8).

Ce turbomoteur est modifié en ce que sa chambre de combustion est remplacée par l'échangeur de chaleur 18. De plus, sa boîte d'accessoires est simplifiée par la suppression du circuit carburant. L'air, détendu et froid, est évacué dans la tuyère 71.

L'énergie thermique récupérée dans la tuyère 70 est ainsi transformée en énergie mécanique par le turbomoteur indépendant 16 et additionnée dans le turbomoteur principal 1 par la recombinaison de puissance localisée en Z1, à travers les pignons de prise d'arbres de puissance 14 et 30. Ainsi, selon les besoins, une puissance supplémentaire est rendue disponible sur l'arbre 80.

L'arbre de puissance 14 du turbomoteur indépendant 16 est monté via un crabot denté 11 et un arbre complémentaire 140 en prise amont par le pignon P3. Ce crabot denté permet de déconnecter le turbomoteur 16 du turbomoteur 1 en cas de dysfonctionnement de celui-ci, ce qui garantit l'indépendance du turbomoteur.

En référence aux figures 2a et 2b, deux alternatives au crabot comme moyen de déconnexion de fonction équivalente sont illustrées :
- en figure 2a, l'arbre de puissance 14 du turbomoteur 1 (en vue partielle) présente une section à casser 12, l'arbre 14 et l'arbre complémentaire 140 ne seront alors déconnectés qu'en cas de dysfonctionnement du turbomoteur 16 ; une connexion de rigide à souple, permettant des désalignements, est réalisée par deux flasques 141 et 142 ;
- en figure 2b, les extrémités 143 et 144 en regard, respectivement, de l'arbre de puissance 14 et de l'arbre complémentaire 140, forment les pistes d'un palier à roue libre 13 réalisant une liaison d'entraînement débrayable entre ces arbres.

Outre le turbomoteur auxiliaire 16, le système indépendant peut être, plus généralement, un moteur thermique auxiliaire en cycle ouvert à turbine libre(s) ou liée(s) - c'est-à-dire à un seul arbre - dans laquelle la chambre de combustion est modifiée pour être couplée à l'échangeur de chaleur de la turbomachine principale, un moteur à fluide à changement de phases comportant en particulier un condenseur, une pompe et un compresseur, ou encore un moteur en cycle ouvert à pistons selon un cycle à deux ou quatre temps, également couplé à l'échangeur de chaleur.

L'arbre de puissance fournie par le turbomoteur principal 1 peut être extérieur et donc non traversant. Dans ce cas, tel qu'illustré sur les vues schématisées des figures 3a et 3b, le pignon P1 de prise de l'arbre de puissance non traversant 31 et le réducteur 20 sont en position aval. Le système indépendant 16 est recombiné directement par le réducteur (figure 3a) ou par un boîtier additionnel 90 rapporté sur le turbomoteur 1 (figure 3b).

En figure 3a, l'arbre de puissance 15 englobe les arbres 14 et 140 ainsi qu'un des systèmes de connexion précédents (crabot 11, section à casser 12, flasques d'alignement 141, 142 et roue libre 143). Cet arbre 15 est avantageusement en liaison colinéaire sur un arbre extérieur de puissance 81 et l'arbre de transmission de puissance 80, en arrière de son pignon P2 de prise sur le réducteur 20. La zone Z2 de recombinaison de puissance est localisée en aval. En figure 3b, l'arbre extérieur de puissance disponible 81 et l'arbre de puissance 15 du système indépendant 16 sont connectés via les pignons P2 et P3 dans le boîtier additionnel de liaison 90. La zone de recombinaison Z1 est alors en amont.

Dans une autre configuration, le turbomoteur possède un arbre traversant sans réducteur, c'est-à-dire en prise directe amont. Dans ces conditions, l'arbre traversant 30 est directement couplé à l'arbre de transmission de puissance 80 et la recombinaison de puissance est réalisée en amont. Les figures 4a et 4b montrent une telle recombinaison amont en zone Z1, sur pignons P2 et P3, selon des coupes schématisées. Pour une entrée d'air radiale 40 (figure 4a), il est possible d'effectuer la recombinaison de puissance de l'arbre 15 au niveau de la boîte d'accessoires 91 du turbomoteur. Cette boîte d'accessoires permet la connexion aux accessoires du turbomoteur (injecteurs, capteurs, etc.) et aux équipements de l'aéronef (alternateur, pompe, etc.). Pour une entrée d'air axiale 41 (figure 4b), il est avantageux d'intégrer un boîtier additionnel 90 pour s'adapter plus aisément à la configuration par une mécanique appropriée (pignons, renvois réducteur, etc.).

En figure 5, la prise directe (sans réducteur) est réalisée en aval, sur l'arbre de puissance non traversant 31 couplé directement à l'arbre de transmission de puissance 80. De manière semblable au cas précédent (figure 4b), les pignons P2 et P3 d'un boîtier additionnel 90 assurent une prise de fourniture de puissance provenant du système indépendant 16 par recombinaison de l'arbre 15 sur l'arbre de puissance non traversant 31 qui fournit la puissance disponible via l'arbre 80. La zone de recombinaison de puissance Z2 est dans ce cas localisée en aval.

Dans les exemples d'architecture précédents, la recombinaison de puissance a permis de définir un arbre de transmission puissance disponible comme la seule interface mécanique avec l'aéronef pour fournir les besoins en puissance globale. Dans ces configurations, la puissance mécanique délivrée par le système indépendant 16 est recombinée avec celle du turbomoteur 1 par l'intermédiaire d'un arbre de puissance 15 - via les arbres 14 et 140 - d'un réducteur 20, d'un boîtier additionnel 90 ou de la boîte accessoire 91. Alternativement, le système indépendant 16 peut être « flasqué », c'est-à-dire fixé directement, sur les différents moyens de recombinaison ci-dessus, en s'affranchissant des arbres de puissance 14 et 140 (figure 1).

Le niveau de puissance disponible atteint reflète les capacités de fourniture du système indépendant 16 et du turbomoteur 1. Il est avantageux, en terme de bilan énergétique, d'utiliser en priorité - voire uniquement - la puissance fournie par le système indépendant à travers l'interface mécanique, afin d'optimiser le rendement global de l'architecture complète « turbomoteur et dispositif indépendant ».

Le système indépendant 16 est connecté à au moins l'un des arbres HP et/ou de puissance du turbomoteur c'est-à-dire, plus généralement, à un générateur de gaz, par exemple le générateur 50 illustré en figure 6. Ainsi, la vue en coupe schématisée de l'exemple d'architecture illustré par cette figure 6, présente la transmission de puissance délivrée par le système indépendant 16 aux arbres HP 57 et traversant 30, via un arbre et un système de double transmission mécanique 17. Ce système dirige, en fonction des besoins définis par le module de gestion de l'aéronef, la puissance délivrée par le système indépendant 16 vers les arbres de transmission 58 ou 59 montés sur le système 17. Ces arbres 58 et 59 entraînent respectivement, l'arbre de puissance traversant 30 et l'arbre HP 57 via des pignons et des renvois appropriés 96. La recombinaison de puissance se fait alors au niveau de ces pignons, en zone amont Z1.

Par exemple, pendant des phases transitoires ou de courtes durées lors des phases stabilisées, un surplus de puissance est ajouté par l'arbre 59 à l'arbre HP 57 et pendant des durées complémentaires, un surplus de puissance est ajouté par l'arbre 58 à l'arbre traversant 30.

Alternativement, dans une variante de recombinaison électrique, à partir d'une transformation d'énergie mécanique fournie par le système indépendant en énergie électrique par un générateur électrique - avantageusement intégré dans le système indépendant -, un câble de transmission électrique 19a et un moteur électrique 17a entraînent les arbres 58 et 59 en fonction des besoins, suivant des consignes fournies par une unité de commande du module de gestion.

Une transformation électrique de la puissance fournie par le système indépendant peut aussi être utilisée directement par le réseau de bord ou les équipements du turbomoteur. La vue en coupe schématisée de la figure 7 illustre un exemple d'architecture correspondant. Dans cette architecture, le turbomoteur 1 est équipé d'un arbre de puissance non traversant aval 31, sans réducteur, et le système indépendant 16 est connecté à un alternateur 92 via l'arbre 14, l'alternateur chargeant une batterie 93. L'alternateur est alors apte à fournir, de la puissance électrique au réseau de bord 2 de l'aéronef en fonction des besoins électriques 94. Le réseau de bord est alimenté également par le turbomoteur ou par des générateurs sur la boîte de transmission principale. Il prend alors la fonction de recombinaison de puissance. Comme vu précédemment pour des raisons de rendement, la puissance utilisée est en priorité celle fournie par le système indépendant 16 via l'alternateur 92. Une partie de cette puissance électrique, provenant de l'alternateur 92 et/ou de la batterie 93 peut également être utilisée via un moteur électrique 95. Ce moteur permet d'entraîner certains équipements de l'aéronef (pompes, alternateurs, compresseur de charge, ...), des accessoires du turbomoteur (pompes, etc.), ou générer un apport de puissance supplémentaire pendant certaines phases de fonctionnement du turbomoteur, par exemple pendant les phases transitoires d'accélération du turbomoteur.

Avantageusement, l'utilisation de la puissance de recombinaison sous forme électrique permet de disposer d'une souplesse d'intégration dans l'architecture du moteur. Cette solution électrique peut s'appliquer en particulier dans le cas d'architectures de turbomachines où la recombinaison mécanique ne disposerait que d'un espace réduit, par exemple dans des architectures sans réducteur.

Dans le cas d'une architecture multi-moteur, le positionnement du système indépendant 16 peut être soit intégré sur une turbomachine selon les configurations illustrées précédemment, soit mis en commun à toutes les turbomachines. La vue en coupe schématisée de la figure 8 illustre une telle configuration pour une architecture à environnement bi-turbomoteur 1 a et 1 b. Le système indépendant 16 récupère l'énergie thermique par une canalisation 100 qui relie en série les échangeurs de chaleur 181 et 182 positionnés respectivement dans les tuyères d'échappement 70a et 70b des turbomoteurs 1a et 1 b. La puissance mécanique fournie sur l'arbre 15 en sortie du système indépendant 16 est recombinée directement sur la boîte de transmission principale BTP 3 avec les arbres de transmission de puissance 80a et 80b des turbomoteurs (en liaison, dans cet exemple, avec respectivement des arbres de puissance extérieurs 81 a et 81 b).

La présente invention n'est pas limitée aux architectures à turbomoteurs des exemples précédents, mais peut s'étendre à toute turbomachine. La vue en coupe schématisée de la figure 9 illustre par exemple une architecture de turbopropulseur 4. Ce turbopropulseur comporte en particulier un réducteur 200 d'hélice 5, comme moyen de recombinaison de l'arbre de puissance 15 du système indépendant sur l'arbre de transmission de puissance disponible 80 fournie par l'arbre traversant 30 d'une configuration de base 10. Alternativement, le système indépendant 16 est flasqué sur le réducteur de puissance 200 sans arbre de transmission 14 et/ou 140 (figure 1). Le turbopropulseur 4 possède également un manchon d'air 6 axial raccordé à l'entrée d'air radiale 40 de la configuration de base 10.

La figure 10 illustre une vue en coupe schématisée d'un autre type d'architecture de turbomachine, celle d'un APU 7. La configuration de base 10 d'un tel APU comporte un arbre traversant 30 qui vient fournir toute sa puissance via l'arbre de transmission 80 à une boîte d'accessoires 8 connectée à cet arbre 30 en zone amont Z1. La boîte d'accessoires 8 entraîne les accessoires moteur de l'APU 7 et les équipements auxiliaires 9 propres au fonctionnement de l'aéronef : alternateur, injecteur, pompe, compresseur de charge, pompe hydraulique, etc. Par l'arbre de puissance 15, le système indépendant 16 est également connecté à cette boîte d'accessoires 8 qui sert de moyen de recombinaison de puissance. Alternativement, le système indépendant 16 est flasqué sur la boîte 8 pour s'affranchir des arbres de transmission 14 et/ou 140 (figure 1). Le système indépendant peut alors fournir une puissance mécanique supplémentaire qui sera utilisée de préférence en priorité, selon les besoins en fonctionnement.

D'autres configurations d'architecture sont également dans le champ d'application de la présente invention : le système indépendant 16 peut être connecté à un réducteur commun à au moins une turbomachine qui incorpore toutes les transmissions, par exemple au rotor d'hélicoptère, aux accessoires de la turbomachine et aux équipements de l'aéronef.

Dans le but d'obtenir une meilleure intégration, le système indépendant 16, la ou les turbomachine (s) et le réducteur peuvent également être intégrés dans un même ensemble de manière à mutualiser certaines fonctions (lubrification, carter commun, refroidissement, entrées d'air.....) et minimiser la masse et l'encombrement de l'ensemble.

Par ailleurs, les configurations de base ne sont pas toutes alignées sur une même ligne ou agencées de la même manière. Par exemple, selon certaines architectures, les turbines et/ou les chambres de combustion peuvent être décalées parallèlement à cette ligne.

De plus, la transmission de puissance peut être réalisée par un arbre 80 comme dans les exemples illustrés ou par tout autre moyen de transmission.

## Revendications

1. Procédé de recombinaison de puissance fournie par une turbomachine (1, 4, 7) d'aéronef ayant une configuration de base (10) comportant au moins un générateur de gaz (50), une turbine de puissance (60) et une tuyère d'échappement (70), **caractérisé en ce qu'**il consiste à récupérer de l'énergie par un échange thermique dans la tuyère d'échappement (70), à transformer ensuite cette énergie récupérée par un système indépendant (16) sous forme d'énergie mécanique, et à recombiner l'énergie transformée à l'énergie fournie par la turbomachine dans une zone unique (Z1, Z2, 3, 8) selon la configuration de la turbomachine, la recombinaison, de nature mécanique ou électrique, étant réalisée par connexion correspondante (17, 19; 17a, 19a) à un arbre d'entraînement HP (57) du générateur de gaz (50) et à un arbre de puissance (30, 31) de la turbine de puissance (60) et dédiée à la fourniture de puissance mécanique et/ou électrique en fonction des besoins de la turbomachine (1, 4, 7) et de fonctionnement de l'aéronef,.

2. Procédé de recombinaison de puissance selon la revendication 1, dans lequel la recombinaison est réalisée dans une zone choisie parmi une zone amont (Z1), une zone aval (Z2), une zone de transmission principale (3) et une zone de regroupement global des moyens de transmission de puissance.

3. Procédé de recombinaison de puissance selon la revendication 1 ou 2, dans lequel la recombinaison est de nature mécanique et réalisée sur un arbre de puissance (30, 31) de la turbomachine (1, 4, 7) par l'intermédiaire d'une connexion choisie parmi une réduction de puissance (20), une liaison additionnelle (90), une liaison aux accessoires (8, 91) et une transmission principale (3), en fonction de la configuration de la turbomachine (1, 4, 7).

4. Procédé de recombinaison de puissance selon la revendication 1 ou 2, dans lequel la recombinaison est réalisée par connexion sur l'arbre d'entraînement HP (57) du générateur de gaz (50) pendant des phases de fonctionnement de la turbomachine et sur l'arbre de puissance (30, 31) de la turbine de puissance (60) pendant des durées complémentaires.

5. Procédé de recombinaison de puissance selon la revendication 1 ou 2, dans lequel la recombinaison est de nature électrique et réalisée par transformation de l'énergie récupérée en énergie électrique sur un réseau de bord (2) de l'aéronef et/ou vers des accessoires de la turbomachine et/ou par motorisation électrique pour entraîner des équipements de l'aéronef.

6. Procédé de recombinaison de puissance selon la revendication 1 ou 2 dans un environnement multi-moteur (1 a, 1 b), le procédé consistant alors à utiliser le système indépendant (16) de transformation énergétique en position sur un seul moteur (1 a, 1 b) ou commun aux moteurs en récupérant l'énergie des moteurs (1 a, 1 b) par des échanges thermiques montés en série (18a, 18b) dans les tuyères (70a, 70b) des moteurs (1 a, 1 b).

7. Architecture de turbomachine de mise en oeuvre du procédé selon l'une quelconque des revendications précédentes, comportant au moins un générateur de gaz (50), une turbine de puissance (60), une tuyère d'échappement (70) et, un échangeur de chaleur (18, 18a, 18b) positionné dans la tuyère d'échappement (70), **caractérisée en ce qu'**elle comporte également un système indépendant (16) de transformation d'énergie thermique en énergie mécanique couplé à l'échangeur de chaleur, et des moyens de recombinaison mécaniques (20, 90, 91, 17, 19) et électriques (2, 17a, 19a) connectés à ce système indépendant (16) et localisés en une zone unique (Z1, Z2, 3, 8) selon la configuration de la turbomachine, les moyens de recombinaison sont aptes à transmettre la puissance fournie par le système indépendant (16) sur l'arbre d'entraînement HP (57) du générateur de gaz (50) et sur l'arbre de puissance (30, 31) de la turbine de puissance (60) pour satisfaire aux besoins mécaniques et/ou électriques correspondants de la turbomachine et de l'aéronef.

8. Architecture de turbomachine selon la revendication précédente, dans laquelle le système indépendant (16) est un moteur thermique choisi parmi un turbomoteur auxiliaire en cycle ouvert à turbine libre ou liée, dans lequel une chambre de combustion est remplacée par un échangeur de chaleur (18), un moteur à fluide à changement de phases comportant un condenseur, une pompe et un compresseur, et un moteur à air en cycle ouvert à pistons selon un cycle à deux ou quatre temps, couplé à l'échangeur de chaleur.

9. Architecture de turbomachine selon l'une des revendications 7 ou 8, dans laquelle la turbine de puissance (60) est connectée au système indépendant (16), sur les moyens de recombinaison mécaniques et/ou électriques (20, 91, 17, 19, 17a, 19a) via des arbres de puissance (30, 31, 81, 81 a, 81 b, 15),.

10. Architecture de turbomachine selon l'une des revendications 7 à 9 dans laquelle, l'arbre de puissance étant un arbre traversant amont (30), l'arbre traversant amont (30) et l'arbre de puissance (15) du système indépendant (16) sont couplés via des moyens mécaniques de recombinaison, constituant une interface mécanique unique pour l'aéronef, choisis entre un réducteur de puissance (20, 200), une boîte de transmission principale (3), une boîte d'accessoires (8, 91) et un boîtier additionnel (90).

11. Architecture de turbomachine selon l'une des revendications 7 et 8, dans laquelle l'arbre de puissance étant un arbre non traversant aval (31) apte à transmettre soit directement soit par couplage à un arbre de puissance extérieur (81, 81 a, 81 b), parallèle à la ligne principale (X'X), de la puissance à l'aéronef respectivement soit en aval soit en amont, l'arbre non traversant aval (31) et l'arbre de puissance (15) du système indépendant (16) sont couplés via des moyens mécaniques de recombinaison, constituant une interface mécanique unique pour l'aéronef, choisis entre un réducteur de puissance (20, 200), une boîte de transmission principale (3) et un boîtier additionnel (90) d'adaptation à la configuration de base.

12. Architecture de turbomachine selon l'une quelconque des revendications 7 à 10, dans laquelle des moyens mécaniques (17, 19) et électriques (17a, 19a) sont aptes à transmettre la puissance fournie par le système indépendant (16) à l'arbre HP (57) du générateur de gaz (50) pendant des phases de fonctionnement de la turbomachine et à l'arbre de puissance (30, 31) de la turbine de puissance (60) pendant des durées complémentaires.

13. Architecture de turbomachine selon l'une des revendications 7 ou 10, dans laquelle les moyens de recombinaison électriques sont constitués par un alternateur (92) couplé directement au réseau de bord (2) de l'aéronef ou via un moteur électrique (94) d'entraînement d'équipements de l'aéronef.

## Patentansprüche

1. Verfahren zur Rekombination einer, durch die Turbomaschine (1, 4, 7) eines Flugzeugs gelieferten Leistung, wobei die Turbomaschine eine Grundkonfiguration (10) mit mindestens einem Gasgenerator (50), einer Leistungsturbine (60) und einer Schubdüse (70) aufweist, **dadurch gekennzeichnet, dass** über einen Wärmetausch in der Schubdüse (70) Energie gewonnen wird, diese gewonnene Energie anschließend mittels eines unabhängigen Systems (16) in mechanische Energie umgewandelt wird, und die umgewandelte Energie mit der von der Turbomaschine gelieferten Energie in einem einzigen Bereich (Z1, Z2, 3, 8) je nach Konfiguration der Turbomaschine rekombiniert wird, wobei die Rekombination, mechanischer oder elektrischer Art, durch die entsprechenden Kopplung (17, 19; 17a, 19a) an eine Hochdruck-Antriebswelle (57) des Gasgenerators (50) und an eine Leistungswelle (30, 31) der Leistungsturbine (60) durchgeführt wird, und zur Bereitstellung von mechanischer und/oder elektrischer Leistung gemäß Bedarf der Turbomaschine (1, 4, 7) und Betrieb des Flugzeugs bestimmt ist.

2. Verfahren zur Leistungsrekombination gemäß Anspruch 1, **dadurch gekennzeichnet, dass** die Rekombination in einem, aus vorderem Bereich (Z1) und hinterem Bereich (Z2), Hauptantriebsbereich (3) und globalem Gruppierungsfeld der Mittel zur Leistungsübertragung ausgewählten Bereich stattfindet.

3. Verfahren zur Leistungsrekombination gemäß Anspruch 1 oder 2, **dadurch gekennzeichnet, dass** die Rekombination mechanischer Art ist, und auf einer Leistungswelle (30, 31) der Turbomaschine (1, 4, 7) mittels eines, aus einer Leistungsreduzierung (20), einer zusätzlichen Verbindung (90), einer Verbindung mit dem Zubehör (8, 91) und einem Hauptgetriebe (3) ausgewählten Anschlusses je nach Konfiguration der Turbomaschine (1, 4, 7) ausgeführt wird.

4. Verfahren zur Leistungsrekombination gemäß Anspruch 1 oder 2, **dadurch gekennzeichnet, dass** die Rekombination durch Anschluss an eine Hochdruck-Antriebswelle (57) des Gasgenerators (50) während der Betriebsphasen der Turbomaschine, sowie an die Leistungswelle (30, 31) der Leistungsturbine (60) während zusätzlicher Betriebsphasen erzielt wird.

5. Verfahren zur Leistungsrekombination gemäß Anspruch 1 oder 2, **dadurch gekennzeichnet, dass** die Rekombination elektrischer Art ist, und durch Umwandlung der gewonnenen Energie in elektrische Energie zur Speisung eines Bordnetzes (2) des Flugzeugs und/oder von Zubehör der Turbomaschine und/oder der elektrischen Motorisierung zwecks Antrieb von Flugzeugausstattungen dient.

6. Verfahren zur Leistungsrekombination gemäß Anspruch 1 oder 2 in einer Umgebung mit vielfachen Motoren (1 a, 1 b), **dadurch gekennzeichnet, dass** das Verfahren dann daraus besteht, das unabhängige System (16) zur energetischen Umwandlung zu nutzen, welches sich auf einem einzigen Motor (1 a, 1 b) befindet oder allen Motoren gemein ist, indem die Energie der Motoren (1 a, 1 b) durch seriell in den Auspuffen (70a, 70b) der Motoren (1 a, 1 b) montierte Wärmetauscher (18a, 18b) gewonnen wird.

7. Turbomaschinenarchitektur zur Umsetzung des Verfahrens gemäß einem der vorstehend erwähnten Ansprüche, bestehend aus mindestens einem Gasgenerator (50), einer Leistungsturbine (60), einer Schubdüse (70), einem Wärmetauscher (18, 18a, 18b), der in der Schubdüse (70) angebracht ist, **dadurch gekennzeichnet, dass** sie ebenfalls ein unabhängiges System (16) zur Umwandlung von thermischer Energie in mechanische Energie in Verbindung mit dem Wärmetauscher enthält, sowie mechanische Rekombinationsmittel (20, 90, 91, 17, 19) und elektrische Rekombinationsmittel (2, 17a, 19a) besitzt, die an dieses unabhängige System (16) angeschlossen sind und sich in einem einzigen Bereich (Z1, Z2, 3, 8) je nach Konfiguration der Turbomaschine befinden, dass die Rekombinationsmittel geeignet sind, die vom unabhängigen System (16) gelieferte Leistung an die Hochdruck-Antriebswelle (57) des Gasgenerators (50) und an die Leistungswelle (30, 31) der Leistungsturbine (60) zu übertragen, um den entsprechenden mechanischen und/oder elektrischen Bedarf der Turbomaschine und des Flugzeugs zu stillen.

8. Turbomaschinenarchitektur gemäß vorstehendem Anspruch, in der das unabhängige System (16) ein Verbrennungsmotor ist, der aus folgenden Alternativen ausgewählt ist: Hilfsturbomotor im offenen Zyklus mit freier oder gekoppelter Turbine, in dem eine Brennkammer durch einen Wärmetauscher (18) ersetzt wird, Motor mit Phasenumwandlungsfluid mit einem Kondensator, einer Pumpe und einem Kompressor, und Luftmotor im offenen Zyklus, mit Kolben im Zweier- oder Vierer-Takt, der an einen Wärmetauscher angeschlossen ist.

9. Turbomaschinenarchitektur gemäß einem der vorstehenden Ansprüche 7 oder 8, in welcher die Leistungsturbine (60) an das unabhängige System (16) über Leistungswellen (30, 31, 81, 81 a, 81 b, 15) auf die mechanischen und/oder elektrischen Rekombinationsmittel (20, 91, 17, 19, 17a, 19a) angeschlossen ist.

10. Turbomaschinenarchitektur gemäß einem der vorstehenden Ansprüche 7 bis 9, in welcher die Leistungswelle eine vordere durchgehende Welle (30) bildet, wobei die vordere durchgehende Welle (30) und die Leistungswelle (15) des unabhängigen Systems (16) über mechanische Rekombinationsmittel miteinander verkoppelt sind und so eine einzige mechanische Schnittstelle für das Flugzeug bilden, wobei folgende Alternativen zur Wahl stehen: Untersetzungsgetriebe (20, 200), Hauptgetriebe (3), Neben- bzw. Zusatzgetriebe (8, 91) und Zusatzbox (90).

11. Turbomaschinenarchitektur gemäß einem der vorstehenden Ansprüche 7 und 8, in welcher die Leistungswelle eine nicht durchgängige untere Welle (31) ist, die geeignet ist, entweder direkt oder über die Kupplung mit einer externen, parallel zur Hauptlinie (X'X) angeordneten Leistungswelle (81, 81 a, 81 b) Leistung entweder flussaufwärts oder flussabwärts ans Flugzeug zu übertragen, wobei die untere, nicht durchgängige Welle (31) und die Leistungswelle (15) des unabhängigen Systems (16) über mechanische Rekombinationsmittel gekoppelt sind und eine einzige mechanische Schnittstelle für das Flugzeug bilden, wobei folgende Alternativen zur Wahl stehen: Untersetzungsgetriebe (20, 200), Hauptgetriebe (3), und Zusatzbox (90) als Adapter für die Grundkonfiguration.

12. Turbomaschinenarchitektur gemäß einem beliebigen der vorstehenden Ansprüche 7 bis 10, in welcher die mechanischen Mittel (17, 19) und die elektrischen Mittel (17a, 19a) geeignet sind, die vom unabhängigen System (16) an die Hochdruck-Welle (57) des Gasgenerators (50) während der Betriebsphasen der Turbomaschine und die, während der zusätzlichen Betriebsphasen an die Leistungswelle (30, 31) der Leistungsturbine (60) gelieferte Energie zu übertragen.

13. Turbomaschinenarchitektur gemäß einem der vorstehenden Ansprüche 7 oder 10, in welcher die elektrischen Rekombinationsmittel von einem Wechselstromgenerator (92) gebildet werden, der direkt ans Bordnetz (2) des Flugzeugs oder über einen elektrischen Antriebsmotor (94) für Flugzeugausstattungen angeschlossen ist.

## Claims

1. Method for recombining power supplied by an aircraft turbomachine (1, 4, 7) having a basic conformation (10) including at least a gas generator (50), a power turbine (60) and an exhaust nozzle (70), **characterized in that** it consists in recovering energy by means of a heat exchange in exhaust nozzle (70), in then converting this recovered energy into mechanical energy form by means of an independent system (16), and in recombining the converted energy with the energy supplied by the turbomachine in a single zone (Z1, Z2, 3, 8) according to the conformation of the turbomachine, the recombination, of mechanical or electric nature, being achieved by ways of a corresponding connection (17, 19; 17a, 19a) to a high pressure drive-shaft (57) of gas generator (50) and to a power shaft (30, 31) of power turbine (60) and being dedicated to the supply of mechanical and/or electric power according to the requirements of turbomachine (1, 4, 7) and the operation requirements of the aircraft.

2. Method for recombining power according to claim 1, wherein recombination is achieved in a zone selected among an upstream zone (Z1), a downstream zone (Z2), a main transmission zone (3) and a zone for the global grouping of the power transmission means.

3. Method for recombining power according to claim 1 or 2, wherein recombination is of mechanical nature and is achieved with a power shaft (30, 31) of turbomachine (1, 4, 7) through a connection selected among a power curtailment (20), an additional connection (90), a connection to auxiliary equipments (8, 91) and a main transmission (3), according to the conformation of turbomachine (1, 4, 7).

4. Method for recombining power according to claim 1 or 2, wherein recombination is achieved by connection to HP drive-shaft (57) of gas generator (50) for running phases of the turbomachine and to power shaft (30, 31) of power turbine (60) for complementary time durations.

5. Method for recombining power according to claim 1 or 2, wherein recombination is of an electrical nature and achieved by conversion of the recovered energy into electric energy into an on-board network (2) of the aircraft and/or to auxiliary equipments of the turbomachine and/or by electrical motorization in order to drive aircraft equipments.

6. Method for recombining power according to claim 1 or 2 in a multi-engine environment (1 a, 1 b), the method then consisting in using independent system (16) for energy conversion, positioned on a single engine (1 a, 1 b) or common to the engines, and recovering energy from engines (1 a, 1 b) by means of heat exchangers mounted in series (18a, 18b) in nozzles (70a, 70b) of engines (1 a, 1 b).

7. Architecture of a turbomachine for implementing the method according to any one of the preceding claims, including at least a gas generator (50), a power turbine (60), an exhaust nozzle (70) and a heat exchanger (18, 18a, 18b) positioned in exhaust nozzle (70), **characterized in that** it also includes an independent system (16) for converting thermal energy into mechanical energy coupled to the heat exchanger, and mechanical (20, 90, 91, 17, 19) and electrical (2, 17a, 19a) recombination means connected to this independent system (16) and located in a single zone (Z1, Z2, 3, 8) according to the conformation of the turbomachine, the recombination means being capable of transmitting the power supplied by independent system (16) to HP drive-shaft (57) of gas generator (50) and to power shaft (30, 31) of power turbine (60) in order to meet the corresponding mechanical and/or electrical requirements of the turbomachine and aircraft.

8. Architecture of a turbomachine according to the preceding claim, wherein the independent system (16) is a heat engine selected among an open-cycle auxiliary turboshaft engine with free or connected power turbine in which a combustion chamber is replaced with a heat exchanger (18), a phase-change fluid motor including a condenser, a pump and a compressor, and a piston open-cycle air engine working according to a two or four-stroke cycle, coupled to the heat exchanger.

9. Architecture of a turbomachine according to one of claims 7 or 8, wherein power turbine (60) is connected to independent system (16), with mechanical and/or electrical recombination means (20, 91, 17, 19, 17a, 19a) via power shafts (30, 31,81, 81 a, 81 b, 15).

10. Architecture of a turbomachine according to one of claims 7 to 9, wherein, the power shaft being an upstream through shaft (30), upstream through shaft (30) and power shaft (15) of independent system (16) are coupled via mechanical recombination means, constituting a single mechanical interface for the aircraft, selected among a power reduction gear (20, 200), a main gearbox (3), an auxiliary equipment box (8, 91) and an additional box (90).

11. Architecture of a turbomachine according to one of claims 7 and 8, wherein the power shaft being a downstream non-through shaft (31) capable of transmitting, either directly or by coupling to an outside power shaft (81, 81 a, 81 b) parallel to main line (X'X), power to the aircraft either downstream or upstream respectively, downstream non-through shaft (31) and power shaft (15) of independent system (16) are coupled via mechanical recombination means, constituting a single mechanical interface for the aircraft, selected among a power reduction gear (20, 200), a main gearbox (3) and an additional box (90) for adaptation to the basic conformation.

12. Architecture of a turbomachine according to any one of claims 7 to 10, wherein mechanical (17, 19) and electrical (17a, 19a) means are capable of transmitting the power supplied by independent system (16) to HP shaft (57) of gas generator (50) for running phases of the turbomachine and to power shaft (30, 31) of power turbine (60) for complementary time durations.

13. Architecture of a turbomachine according to one of claims 7 or 10, wherein the electrical recombination means are constituted by an alternator (92) coupled directly to on-board network (2) of the aircraft or via an electric motor (94) for driving aircraft equipments.
